# EUROPÄISCHE PATENTSCHRIFT

(11) **EP 1 845 136 B1**
(45) Veröffentlichungstag und Bekanntmachung des Hinweises auf die Patenterteilung: **23.05.2012**
(21) Anmeldenummer: 07105173.4
(22) Anmeldetag: 29.03.2007
(51) Int. Cl.: C09C 1/30

(54) **Rheologiesteuerung stark basischer Flüssigkeiten**
Rheology control of strongly basic liquids
Contrôle de la rhéologie de liquides fortement basiques

(30) Priorität: 13.04.2006 DE 102006017592
(43) Veröffentlichungstag der Anmeldung: 17.10.2007
(73) Patentinhaber: Wacker Chemie AG, 81737 München (DE)
(72) Erfinder: Gottschalk-Gaudig, Torsten, Dr., 84561, Mehring (DE); Dreyer, Michael, 84458, Burgkirchen (DE)
(74) Vertreter: Gössmann, Christoph Tassilo

(56) Entgegenhaltungen:
- WO-A-2005/003218
- DE-A1- 4 419 234
- US-A- 5 665 156

## Beschreibung

Die Erfindung betrifft oberflächenmodifizierte pyrogene Kieselsäuren, die geeignet sind als rheologische Additive in flüssigen Medien, die stark basische Gruppen enthalten, den Einsatz der erfindungsgemäßen Kieselsäuren und deren Herstellung.

Pyrogene Kieselsäuren sind weit verbreitete Additive für die Steuerung der Fließeigenschaften von Klebstoffen, Dichtstoffen und Beschichtungsstoffen wie Farben oder Lacken. Pyrogene Kieselsäuren werden eingesetzt zur Einstellung der Viskosität, zur Einstellung der scherverdünnenden und thixotropen Eigenschaften und zum Einstellen der Fließgrenze.
Für unpolare, höhermolekulare Systeme mit hohem Lösungsmittelanteil werden bevorzugt unmodifizierte, d.h. hydrophile pyrogene Kieselsäuren eingesetzt. Oberflächenmodifizierte, d.h. hydrophobe Kieselsäuren, wie z.B. mit Dimethylsiloxy-Gruppen modifizierte Kieselsäuren wie beschrieben in DE 1163784 werden bevorzugt in polaren, niedermolekularen Systemen mit geringem Lösungsmittelgehalt oder lösungsmittelfreien Systemen eingesetzt.
Das Einstellen einer über einen längeren Zeitraum stabilen Viskosität bzw. Fließgrenze bei Flüssigkeiten, die Komponenten mit stark basischen Gruppen, wie Amingruppen, enthalten, erwiesen sich dabei als schwierig.
Hydrophile Kieselsäuren zeigen getrieben durch eine Säure-Basen-Reaktion zwischen den sauren Silanolgruppen der Kieselsäure und den basischen Amingruppen irreversible Adsorption der aminischen Komponente und damit eine mangelhafte Langzeitstabilität von Viskosität und Fließgrenze.
Hydrophobe, z.B. Dimethylsiloxy-Gruppen-modifizierte Kieselsäuren zeigen ebenfalls eine unzureichende Langzeitstabilität von Viskosität und Fließgrenze.

DE 44 19 234 und US 5,665,156 beschreiben mit einem Silan modifizierte Kieselsäure. WO 2005/003218 beschreibt keine mit einem Silan modifizierte Kieselsäure, sondern die Dispergierung von Kieselsäure in einem Silan und einem Siloxan. Die dort beschriebenen Kieselsäuren ermöglichen nicht die langzeitstabile Einstellung der Viskosität und Fließgrenze von Flüssigkeiten, die stark basische Gruppen enthalten.

Aufgabe der Erfindung ist es, die Nachteile des Standes der Technik zu überwinden und eine Methode zur langzeitstabilen Einstellung von Viskosität und Fließgrenze von Flüssigkeiten, die stark basische Gruppen enthalten, bereitzustellen.

Gegenstand der Erfindung ist ein Verfahren zur Herstellung von pyrogener Kieselsäure nach Anspruch 1 und Kieselsäure nach Anspruch 3.

Überraschenderweise und in keiner Weise durch den Fachmann vorauszusehen wurde nun gefunden, daß mit pyrogenen Kieselsäuren, die durch langkettige Alkylsilane in der Art oberflächlich modifiziert wurden, die Kieselsäureoberfläche möglichst homogen, vollständig und permanent modifiziert wurde, lagerzeitstabile Viskositäten und Fließgrenzen von Flüssigkeiten, die stark basische Gruppen enthalten, erzielen lassen. Dabei wurde unerwarteterweise gefunden, daß sich die geeigneten oberflächenbehandelten Kieselsäuren besonders einfach durch thermische Behandlung in einem Temperaturgradienten erhalten lassen.

Die erfindungsgemäß geeigneten Kieselsäuren sind mit Gruppen der allgemeinen Formel (I)

RₐSiR¹_{b}O_{c}- (I)

modifiziert, wobei
a 1, 2, 3,
b 0, 1, 2,
c 1, 2, 3, sein kann, wobei
a + b + c = 4 ist, wobei
R ein einwertiger, gegebenenfalls einfach oder mehrfach ungesättigter, gegebenenfalls verzweigter Kohlenwasserstoffrest mit 1 bis 24 C-Atomen,
R¹ ein ebenfalls einwertiger, gegebenenfalls einfach oder mehrfach ungesättigter, gegebenenfalls verzweigter Kohlenwasserstoffrest mit 1 bis 20 C-Atomen sein kann. Bevorzugt handelt es sich bei Resten R um Alkylreste wie Methyl-, Ethyl-, Propyl-, Hexyl- wie n-Hexyl- oder i-Hexyl-, Octyl- wie n-Octyl- oder i-Octyl-, n-Dodecyl-, n-Hexadecyl- oder n-Octadecylreste.
Bevorzugt handelt es sich bei Resten R¹ um Alkylreste wie Methyl-, Ethyl- oder Propylreste.
Bevorzugte Gruppen auf der Kieselsäureoberfläche sind Trimethylsilyloxy- CH₃Si(O-)₃
n-Propylsilyltrioxy- C₃H₇Si(O-)₃
n-Hexylsilyltrioxy- C₆H₁₃Si(O-)₃
n-Octylsilyltrioxy- C₈H₁₇Si(O-)₃
i-Octylsilyltrioxy- C₈H₁₇Si(O-)₃
n-Octylmethylsilyldioxy- C₈H₁₇SiCH₃(O-)₂
i-Octylmethylsilyldioxy- C₈H₁₇SiCH₃(O-)₂
n-Hexadecylsilyltrioxy- C₁₆H₃₃Si(O-)₃
n-Hexadecylmethylsilyldioxy- C₁₆H₃₃SiCH₃(O-)₂
n-Dodecylsilyltrioxy- C₁₈H₃₇Si(O-)₃
n-Dodecylmethylsilyldioxy- C₁₈H₃₇SiCH₃(O-)₂.
Besonders bevorzugt sind
n-Octylsilyltrioxy- C₈H₁₇Si (O-)₃
i-Octylsilyltrioxy- C₈H₁₇Si (O-)₃
n-Octylmethylsilyldioxy- C₈H₁₇SiCH₃(O-)₂
n-Hexadecylsilyltrioxy- C₁₆H₃₃Si(O-)₃
n-Dodecylsilyltrioxy- C₁₈H₃₇Si(O-)₃.

Die Kieselsäureoberfläche kann ausschließlich mit einer Gruppenart modifiziert sein oder gleichzeitig mit verschiedenen Gruppen. Bevorzugt ist die Modifizierung mit ausschließlich einer Art.

Die oberflächenmodifizierte Kieselsäure kann in kontinuierlichen, oder diskontinuierlichen Verfahren hergestellt werden, das Verfahren zur Modifizierung kann aus einem oder mehreren Schritten aufgebaut sein. Bevorzugt wird die oberflächenmodifizierte Kieselsäure mittels eines Verfahrens hergestellt, bei dem der Herstellungsprozeß in getrennten Schritten erfolgt: (A) zunächst Herstellung der hydrophilen Kieselsäure, (B) die Modifizierung der Kieselsäure mit
(1) Beladung der hydrophilen Kieselsäure mit Silanen der allgemeinen Formel II,

   RₐSiR¹_{b}X_{c} (II)

   wobei R, R¹, a, b, c die oben genannte Bedeutung haben und X = Halogen, Stickstoffrest, OR¹, OCOR¹, O(CH₂)ₓOR¹ und x = 1, 2, 3 bedeutet,
(2) Reaktion der Kieselsäure mit den aufgebrachten Verbindungen und (C) Reinigung der Kieselsäure von überschüssigen aufgebrachten Verbindungen und Nebenprodukten.

Die Oberflächenbehandlung wird bevorzugt in einer Atmosphäre durchgeführt, die nicht zur Oxidation der modifizierten Kieselsäure führt, d.h. bevorzugt weniger als 10 Vol.% Sauerstoff, besonders bevorzugt weniger als 2,5 Vol.%, beste Ergebnisse werden erzielt bei weniger als 1 Vol.% Sauerstoff.

Belegung, Reaktion und Reinigung können als diskontinuierlicher oder kontinuierlicher Prozeß durchgeführt werden.
Aus technischen Gründen bevorzugt ist eine kontinuierliche Reaktionsführung.

Die Belegung (Schritt B) erfolgt bevorzugt bei Temperaturen von -30 bis 250 °C, bevorzugt 20 bis 150 °C, im Besonderen bevorzugt 20 bis 80 °C; in einer speziellen Ausführung erfolgt der Belegungsschritt bei 30 bis 50 °C.

Die Verweilzeit beträgt 1 min - 24 h, bevorzugt 15 min bis 300 min, aus Gründen der Raumzeitausbeute besonders bevorzugt 15 min bis 240 min.

Der Druck in der Belegung reicht von schwachem Unterdruck bis 0,2 bar bis zum Überdruck von 100 bar, wobei aus technischen Gründen Normaldruck, das heißt druckfreies Arbeiten gegenüber Außen-/Atmosphären-Druck, bevorzugt ist.

Die Silane der allgemeinen Formel II werden bevorzugt in flüssiger Form zugefügt, und insbesondere der pulverförmigen Kieselsäure zugemischt. Die Verbindungen können dabei in reiner Form oder als Lösungen in bekannten technisch eingesetzten Lösungsmitteln wie z.B. Alkoholen wie z.B. Methanol, Ethanol, oder i-Propanol, Ethern wie z.B. Diethylether, THF, oder Dioxan, oder Kohlenwasserstoffen wie z.B. Hexanen oder Toluol zugemischt werden. Die Konzentration in der Lösung beträgt dabei 5 - 95 Gew.%, bevorzugt 30 - 95 Gew.%, besonders bevorzugt 50 - 95 Gew.%.
Das Zumischen geschieht vorzugsweise durch Düsentechniken, oder vergleichbare Techniken, wie effektive Verdüsungstechniken, wie Verdüsen in 1-Stoffdüsen unter Druck (vorzugsweise 5 bis 20 bar), Versprühen in 2-Stoffdüsen unter Druck (vorzugsweise Gas und Flüssigkeit 2-20 bar), Feinstverteilen mit Atomizern oder Gas-Feststoff-Austauschaggregaten mit beweglichen, rotierenden oder statischen Einbauten, die eine homogene Verteilung der Silane der allgemeinen Formel II mit der pulverförmigen Kieselsäure erlauben.
Das Aerosol kann von oben auf den fluidisierten Feststoff aufgedüst werden oder in den fluidisierten Feststoff hinein, bevorzugt ist Verdüsung von oben auf das Produkt.

Bevorzugt werden die Silane der allgemeinen Formel II als feinstverteiltes Aerosol zugefügt, dadurch gekennzeichnet, daß das Aerosol eine Sinkgeschwindigkeit von 0,1 - 20 cm/s aufweist.
Bevorzugt erfolgt die Beladung der Kieselsäure und die Reaktion mit den Silanen der allgemeinen Formel II unter mechanischer oder gasgetragener Fluidisierung. Besonders bevorzugt ist die mechanische Fluidisierung.
Eine Gas-getragene Fluidisierung kann durch alle inerten Gase erfolgen, die nicht mit den Silanen der allgemeinen Formel II , der Kieselsäure, und der modifizierten Kieselsäure reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc. Die Zuführung der Gase zur Fluidisierung erfolgt bevorzugt im Bereich von Leerrohrgasgeschwindigkeiten von 0,05 bis 5 cm/s, besonders bevorzugt von 0,5-2,5 cm/s.

Besonders bevorzugt ist die mechanische Fluidisierung, die ohne zusätzlichen, über die Inertisierung hinausgehenden Gaseinsatz, durch Flügelrührer, Ankerrührer und sonstige geeignete Rührorgane erfolgt.
In einer besonders bevorzugten Ausführung werden nicht abreagierte Silane der allgemeinen Formel II und Abgase aus dem Reinigungsschritt wieder in den Schritt der Belegung und Beladung der Kieselsäure zurückgeführt; dies kann teilweise oder vollständig geschehen, bevorzugt zu 10 - 90 % des gesamten Volumenstromes, der aus der Abreinigung austretenden Gasvolumina.
Dies geschieht in geeignet temperierten Vorrichtungen.
Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmembranpumpen. Da die Rückführung der nichtkondensierten Phase bevorzugt ist, empfiehlt sich gegebenenfalls die Beheizung der rückführenden Leitungen.
Die Rückführung der nicht abreagierten Silane der allgemeinen Formel II und der Abgase kann dabei zwischen vorzugsweise 5 und 100 Gew.%, bezogen auf deren Gesamtmasse, bevorzugt zwischen 30 und 80 Gew.% liegen. Die Rückführung kann dabei, bezogen auf 100 Teile frisch eingesetztes Silan, zwischen 1 und 200 Teile, bevorzugt 10 bis 30 Teile betragen.
Die Rückführung der Abreinigungprodukte der Modifizierungsreaktion in die Belegung erfolgt bevorzugt kontinuierlich.

Die Reaktion erfolgt bevorzugt bei Temperaturen von 20 - 350 °C, bevorzugt 200 - 300 °C und besonders bevorzugt bei 40 - 300 °C.
Bevorzugt erfolgte die Reaktion in einem Temperaturgradienten im Bereich von 20 °C bis 350 °C d.h., daß die Reaktionstemperatur im Laufe der Reaktionszeit ansteigt. Dies bedeutet, daß zu Beginn der Reaktion die Wandtemperatur des Reaktionsbehälters in einem Bereich von 20 - 40 liegt. Dies bedeutet ferner, daß die Produkttemperatur zu Beginn der Reaktion in einem Bereich von 20-40 liegt.

Dies bedeutet weiterhin, daß gegen Ende der Reaktion die Wandtemperatur des Reaktionsbehälters in einem Bereich von 120 - 350 °C, bevorzugt in einem Bereich von 150 - 300 °C liegt. Dies bedeutet ferner, daß die Produkttemperatur gegen Ende der Reaktion in einem Bereich von 120 - 350 °C, bevorzugt in einem Bereich von 150 - 300 °C liegt.

Dies bedeutet, daß je nach Prozeßdurchführung, d.h. kontinuierlicher oder diskontinuierlicher Prozeßdurchführung, der Temperaturgradient abhängig vom Ort dT/dx (kontinuierlich) oder abhängig von der Zeit dT/dt (diskontinuierlich) sein kann.

Die Reaktionstemperatur, d.h. die Wand- bzw. Produkttemperatur und deren Gradient, kann dabei gemäß folgender Verfahren erreicht werden.

### 1. Kontinuierlicher Prozeßverlauf (d.h. dT/dx):

- Die Kieselsäure wird mittels Gas-getragener oder mechanischer Fluidisierung/Förderung durch eine Heizzone mit ansteigender Wandtemperatur gefördert. Die Wandtemperatur kann dabei kontinuierlich oder in Stufen ansteigen. Im Fall eines stufenweisen Anstiegs kann die Reaktionszone aus bis zu 10 separaten Heizzonen unterschiedlicher Temperatur, bevorzugt 5 separaten Heizzonen unterschiedlicher Temperatur, besonders bevorzugt 3 separaten Heizzonen unterschiedlicher Temperatur, in einer speziellen Ausführung aus 2 separaten Heizzonen unterschiedlicher Temperatur bestehen. Gegebenenfalls können die einzelnen Heizzonen durch Klappen voneinander getrennt sein. Der Reaktionsbehälter kann senkrecht oder waagerecht stehen. Bevorzugt ist die senkrechte Ausführung. Bei senkrechter Ausführung kann die Kieselsäure von unten nach oben oder von oben nach unten die Reaktionszone durchlaufen. Bevorzugt ist von oben nach unten.
   Oder:
- Die Kieselsäure wird mittels Gas-getragener oder mechanischer Fluidisierung/Förderung durch separate Reaktionsbehälter mit unterschiedlicher, d.h. ansteigender Wandtemperatur gefördert. Die Reaktionskaskade kann dabei aus bis zu 10 Reaktionsbehältern unterschiedlicher Wandtemperatur, bevorzugt bis zu 5 Reaktionsbehältern unterschiedlicher Wandtemperatur, besonders bevorzugt bis zu 3 Reaktionsbehältern unterschiedlicher Wandtemperatur, und in einer speziellen Ausführung aus 2 Reaktionsbehältern unterschiedlicher Wandtemperatur bestehen. Die Reaktionsbehälter können senkrecht oder waagerecht stehen. Bevorzugt ist die senkrechte Ausführung. Bei senkrechter Ausführung kann die Kieselsäure von unten nach oben oder von oben nach unten die Reaktionszone durchlaufen. Bevorzugt ist von oben nach unten.
   Oder:
- Die Kieselsäure wird mittels mechanischer Fluidisierung/Förderung durch einen senkrecht stehenden Reaktionsbehälter gefördert. Der Reaktionsbehälter wird im unteren Teil auf die maximale Reaktionstemperatur beheizt. Im Reaktionsbehälter stellt sich dann ein Temperaturgefälle zwischen dem oberen Teil des Reaktionsbehälters (niedrigste Temperatur) und dem unteren Teil des Reaktionsbehälters (höchste Temperatur) ein. Dieses kann beispielsweise durch geeignete Rührtechnik gesteuert werden.

### 2. Diskontinuierlicher Produktionsverlauf (Batchbetrieb)

- Die Kieselsäure wird mittels Inertgas oder mechanisches Rühren im Reaktionsbehälter fluidisiert. Im Laufe der Reaktionsdauer wird die Reaktionstemperatur im Reaktionsbehälter sukzessive, d.h. in Form einer Rampe oder stufenweise erhöht.

Die Verweilzeit pro Reaktionstemperatur liegt zwischen 5 min und 240 min, bevorzugt zwischen 10 min und 180 min und besonders bevorzugt zwischen 15 min und 120 min.

Die Beheizung der Reaktionszone kann z.B. über die Behälterwand z.B. mittels elektrischer Beheizung oder mittels Temperierflüssigkeit oder Dampf erfolgen. Gegebenenfalls können im Reaktionsgefäß z.B. Heizschlangen eingesetzt werden. Gegebenenfalls kann die Beheizung von außen über Infrarotstrahler erfolgen.

Die Temperaturmessung von Wand- und Produkttemperatur kann mittels üblicherweise eingesetzten Meßinstrumenten wie Thermoelementen, Widerstandsthermometern, Bimetallthermometern, IR-Sensoren oder anderen erfolgen.

Die Gesamtreaktionszeit beträgt 10 min bis 48 h, bevorzugt 15 min bis 5 h, besonders bevorzugt 15 min bis 4 h.

Gegebenenfalls können protische Lösungsmittel hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1 bis 50 Gew.% an protischen Lösungsmittel bezogen auf die Kieselsäure zugefügt, besonders bevorzugt 5 bis 25%. Besonders bevorzugt ist Wasser.

Wahlweise können saure Katalysatoren, von saurem Charakter im Sinne einer Lewis Säure oder einer Brönsted Säure, wie Chlorwasserstoff oder basische Katalysatoren, von basischem Charakter im Sinne einer Lewis Base oder einer Brönsted Base, wie Ammoniak oder Amine wie Triethylamin, zugesetzt werden. Bevorzugt werden diese in Spuren zugesetzt, d.h. kleiner als 1000 ppm. Besonders bevorzugt werden keine Katalysatoren zugesetzt.

Die Abreinigung (Schritt C) erfolgt vorzugsweise bei einer Reinigungstemperatur von 20 bis 200 °C, bevorzugt 50°C bis 180°C, besonders bevorzugt von 50 bis 150 °C.
Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, daß bevorzugt ein Mischen und ein Fluidisieren, jedoch nicht völlige Verwirbelung, eintritt.
Der Reinigungsschritt kann weiterhin durch erhöhten Gaseintrag gekennzeichnet sein, entsprechend einer Leerrohrgasgeschwindigkeit von vorzugsweise 0,001 bis 10 cm/s, bevorzugt 0,01 bis 1 cm/s. Dies kann durch alle inerten Gase erfolgen, die nicht mit den Silanen der allgemeinen Formel II, der Kieselsäure, und der modifizierten Kieselsäure reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc.

Zusätzlich können während der Modifizierung oder im Anschluß an die Reinigung Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Modifizierung, im Schritt (II) der Reaktion durch Preßwalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluß an die Reinigung Verfahren zur mechanischen Verdichtung der Kieselsäure eingesetzt, wie Verdichten durch Absaugen des Luft- oder Gasinhaltes durch geeignete Vakuummethoden oder Preßwalzen oder Kombination von beiden Verfahren.

Zusätzlich können in einer besonders bevorzugten Verfahrensweise im Anschluß an die Reinigung Verfahren zur Desagglomerierung der Kieselsäure eingesetzt werden, wie Stiftmühlen, Hammermühlen, Gegenstrommühlen, Prallmühlen oder Vorrichtungen zur Mahlsichtung.

Die erfindungsgemäßen Kieselsäuren weisen eine möglichst vollständige Modifizierung der Oberfläche auf. Dies bedeutet, daß die Restsilanolgruppendichte der Kieselsäure kleiner 1,0 SiOH-Gruppen / nm², bevorzugt kleiner 0,75 SiOH-Gruppen / nm² und ganz besonders bevorzugt kleiner 0,5 SiOH-Gruppen / nm² ist.
Eine geeignete Methode zur Bestimmung des Rest-Silanolgehaltes nach der Modifizierung ist die Säure-Basen-Titration, wie z.B. beschrieben in G.W. Sears, Anal. Chem. 28 (1956) 1981.

Die erfindungsgemäßen Kieselsäuren weisen eine möglichst permanente Modifizierung der Kieselsäureoberfläche mit Alkylsilanen auf.

Eine geeignete Methode zur Bewertung der Permanenz einer Modifizierung ist die quantitative Bestimmung von extrahierbarem, d.h. nicht chemisch an der Kieselsäureoberfläche gebundenem Silan. Die geeigneten Kieselsäuren zeichnen sich dadurch aus, daß sie einen extrahierbaren Anteil von weniger als 8 Gew.%, bevorzugt weniger als 6 Gew.% und besonders bevorzugt von weniger als 5 Gew.% aufweisen.

Die erfindungsgemäßen Kieselsäuren weisen ein chemisches Modifizierungsverhältnis f gleich 0,5 bis 3, bevorzugt f gleich 0,75 bis 2 und ganz besonders bevorzugt f gleich 0,8 bis 1,5 auf. Das chemische Modifizierungsverhältnis f ist definiert als f = (n(Silan) - n(extrahierbares Silan) / n(Silanolgehalt) - n(Rest-Silanolgehalt), wobei n(Silan) die über den Kohlenstoffgehalt der Kieselsäure zugängliche Silanmenge pro 100 m²/g spezifische Ausgangskieselsäureoberfläche ist, n(extrahierbares Silan) die mittels Extraktion und anschließender Si-AAS-Messung quantitative bestimmte extrahierbare Silanmenge pro 100 m²/g spezifische Ausgangskieselsäureoberfläche ist, n(Silanolgehalt) der mittels Säure-Basen-Titration bestimmte Silanolgehalt einer hydrophilen pyrogenen Kieselsäure pro 100 m²/g spezifische Ausgangskieselsäureoberfläche ist, der erfahrungsgemäß ca. 0,0003 mol pro 100 m²/g spezifische Kieselsäureoberfläche ist und n(Rest-Silanolgehalt) der mittels Säure-Basen-Titration bestimmte Rest-Silanolgehalt pro 100 m²/g spezifische Kieselsäureoberfläche der hydrophilen Ausgangskieselsäure ist.

In einer bevorzugten Ausführungsform weisen die erfindungsgemäßen Kieselsäuren einen abgeschirmten Anteil der silikatischen Oberfläche Sₐ durch die Oberflächenmodifizierung von größer 50%, bevorzugt größer 60% auf. Der Anteil der abgeschirmten Oberfläche läßt sich gemäß der Formel Sₐ = (n(Silan) - n(extrahierbares Silan) * N_{A} * S(Silan)) / 100 m²,
wobei n(Alkylsilan) die über den Kohlenstoffgehalt der Kieselsäure zugängliche Silanmenge pro 100 m²/g spezifische Kieselsäureoberfläche der hydrophilen Ausgangskieselsäure ist, n(extrahierbares Silan) die mittels Extraktion und anschließender Si-AAS-Messung quantitative bestimmte extrahierbare Silanmenge pro 100 m²/g spezifische Kieselsäureoberfläche der hydrophilen Ausgangskieselsäure ist, N_{A} die Avogadro-Konstante und S(Silan) die molekulare Netzfläche des entsprechend eingesetzten Silans ist. S(Silan) ist zugänglich gemäß S(Silan) = 1,33 * N_{A}^{1/3} * (M(Silan)/d(Silan))^{2/3} / N_{A}, wobei M(Silan) die Molmasse des Silans und d(Silan) die Dichte ist.

Ein weiterer Gegenstand der Erfindung ist ein Verfahren zur stabilen Einstellung der Fließeigenschaften von basischen Substanzen und Substanzgemischen, wobei erfindungemäße Kieselsäuren zugegeben werden.

Bei den basischen Substanzen und Substanzgemischen handelt es sich vorzugsweise um flüssige Medien, die erfindungsgemäß eingestellt werden, dabei handelt es sich um Flüssigkeiten, als Reinstoff oder Mischung, die stark basische Gruppen bzw. Verbindungen enthalten wie Hydroxidionen, Ammoniak, niedermolekulare Amine wie Trialkylamin wie Trimethyamin, Triethylamin, Pyridine und andere basische N-Heterocyclen, aliphatische Polyamine wie Ethylendiamin oder deren höhere Derivate wie Diethylentriamin oder Triethylentetramin oder Hexyldiamin, cycloaliphatische Polyamine wie Isophorondiamin oder Cyclohexyldiamin, Mannichbasen, aromatische Polyamine wie Aniline wie Methylendianilin, 4,4-Diaminodiphenylsulfon, m-Xylendiamin, amingruppenhaltige Oligomere oder Polymere wie Diaminopolyethylenoxide oder Diaminopolyproplyenoxide wie Jeffamine, Polyamidoamine wie Umsetzungsprodukte aus Fettsäuren und Polyaminen, Imidazoline, Polyaminoamid-Addukte wie Umsetzungen von überschüssigen Polyaminen oder Polyamiden mit Epoxyharzen, Dicyanamid und andere.

Die erfindungsgemäßen Kieselsäuren ergeben Dispersionen von Kieselsäuren in Flüssigkeiten mit stark basischen Gruppen, die sich auszeichnen durch eine ausgezeichnete Lagerstabilität der Viskosität.
Dies bedeutet im Einzelnen, daß die Scherviskosität η nach einer Lagerzeit von 1 Woche bei Raumtemperatur maximal auf 50% des Ausgangswertes, bevorzugt maximal auf 80% des Ausgangswertes und ganz besonders bevorzugt maximal auf 90% des Ausgangswertes abgesunken ist, wobei die Viskosität gemessen wurde mittels Kegel-Platte-Geometrie mit einem Scherspalt von 105 µm und einer Scherrate von 0,5 s⁻¹ bei 25 °C.
Dies bedeutet ferner, daß die Scherviskosität η nach einer Lagerzeit von 4 Woche bei 40 °C maximal auf 50% des Ausgangswertes, bevorzugt maximal auf 80% des Ausgangswertes und ganz besonders bevorzugt maximal auf 90% des Ausgangswertes abgesunken ist, wobei die Viskosität gemessen wurde mittels Kegel-Platte-Geometrie mit einem Scherspalt von 105 µm und einer Scherrate von 0,5 s⁻¹ bei 25 °C.
Dies bedeutet ferner, daß der Thixotropieindex TI nach einer Lagerzeit von 4 Woche bei 40 °C maximal auf 50% des Ausgangswertes, bevorzugt maximal auf 80% des Ausgangswertes und ganz besonders bevorzugt maximal auf 90% des Ausgangswertes abgesunken ist. Der Thixotropieindex TI ist dabei definiert als der Quotient aus der Scherviskosität η₀₅ bei einer Scherrate von 0,5 s⁻¹ dividiert durch die Scherrate η₅₀₀ bei einer Scherrate von 500 s⁻¹, wobei die Viskositäten gemessen wurde mittels Kegel-Platte-Geometrie mit einem Scherspalt von 105 µm und einer Scherrate von 0,5 s⁻¹ bei 25 °C. Zur Ermittlung der Viskositäten wird dabei ein Meßprofil bestehend aus dem Abschnitt 1, 120 s Scherung bei 0,5 s⁻¹, Abschnitt 2, 10 s Scherung bei 500 s⁻¹, und Abschnitt 3, 180 s Scherung bei 0,5 s⁻¹, eingesetzt. Der Thixotropieindex TI ergibt sich dann aus dem Mittelwert der letzten 10 Datenpunkte aus Abschnitt 3 dividiert durch den letzten Datenpunkt aus Abschnitt 2, wobei in Abschnitt 3 alle 2 Sekunden ein Datenpunkt ermittelt wurde und in Abschnitt 2 jede Sekunde ein Datenpunkt ermittelt wurde.

Gegebenenfalls tritt beim erfindungsgemäßen Einsatz der erfindungsgemäßen Kieselsäuren in Flüssigkeiten mit basischen Gruppen viskoelastisches Festkörperverhalten auf. Dies bedeutet, daß bei einem rheologischen Deformationsversuch in Oszillation der Speichermodul G' größer als der Verlustmodul G" ist, wobei dieser Effekt bei einem Kieselsäuregehalt in der Dispersion von größer 1 Gew.-%, bevorzugt bei einem Kieselsäuregehalt von größer 1,5 Gew.-% auftritt. Die Moduli G' und G" können gemäß der Gleichung τ = γ(t) * (G'sinωt + G''cosωt) bestimmt werden, wobei τ die Spannungsantwort der Probe auf die zeitliche Änderung der Deformation γ(t) bei einer Maximalamplitude γ₀ und der Winkelgeschwindigkeit ω ist, d.h. γ(t) = γ₀sinωt. Die Bestimmung der Beträge von G' und G" erfolgt dabei im Plateaubereich des Speichermoduls G', der gewöhnlich bei Deformationen kleiner 0,1 auftritt, bei einer konstanten Winkelgeschwindigkeit ω von 10 rad/s und in einem Deformationsbereich, der sich normalerweise über den Bereich von ca. 10⁻³ bis ca. 10 erstreckt.
Der erfindungsgemäße Einsatz der erfindungsgemäßen Kieselsäuren zeichnet sich durch besondere Langzeitstabilität des viskoelastischen Festkörperverhaltens aus. Dies bedeutet, daß der Speichermodul G' nach einer Lagerzeit von 1 Woche bei Raumtemperatur maximal auf 50% des Ausgangswertes, bevorzugt maximal auf 80% des Ausgangswertes und ganz besonders bevorzugt maximal auf 90% des Ausgangswertes abgesunken ist, wobei der Modul gemessen wurde mittels Kegel-Platte-Geometrie mit einem Scherspalt von 105 µm bei einer Temperatur von 25 °C. Dies bedeutet ferner, daß der Speichermodul G' nach einer Lagerzeit von 4 Woche bei 40 °C maximal auf 50% des Ausgangswertes, bevorzugt maximal auf 80% des Ausgangswertes und ganz besonders bevorzugt maximal auf 90% des Ausgangswertes abgesunken ist, wobei der Modul gemessen wurde mittels Kegel-Platte-Geometrie mit einem Scherspalt von 105 µm bei einer Temperatur von 25 °C.
Beim erfindungsgemäßen Einsatz der Kieselsäuren tritt gegebenenfalls eine Fließgrenze τ_{c} auf. Fließgrenze bedeutet dabei, daß ein Material erst ab einer bestimmten Kraftbelastung fluides Verhalten aufweist.
Die Fließgrenze τ_{c} ist hier definiert als die Schubspannung, bei der der Übergang vom viskoelastischen Festkörper zu einer viskoeslastischen Flüssigkeit eintritt. Dieser Übergang ist dadurch gekennzeichnet, daß der Verlustfaktor tan δ, definiert als der Quotient G''/G', in Abhängigkeit von der angelegten Schubspannung τ den Wert 1 annimmt.
Der erfindungsgemäße Einsatz der erfindungsgemäßen Kieselsäuren zeichnet sich durch besondere Langzeitstabilität der Fließgrenze aus. Dies bedeutet, daß die Fließgrenze τ_{c} nach einer Lagerzeit von 1 Woche bei Raumtemperatur maximal auf 50% des Ausgangswertes, bevorzugt maximal auf 80% des Ausgangswertes und ganz besonders bevorzugt maximal auf 90% des Ausgangswertes abgesunken ist, wobei die Fließgrenze τ_{c} bestimmt wird aus einem rheologischen Spannungsexperiment in Oszillation bei einer Kreisfrequenz ω von 10 rad/s in einem Spannungsbereich τ von 0,1 Pa bis 2τ_{c} mittels Kegel-Platte-Geometrie mit einem Scherspalt von 105 µm bei einer Temperatur von 25 °C.
Dies bedeutet ferner, daß die Fließgrenze τ_{c} nach einer Lagerzeit von 4 Woche bei 40 °C maximal auf 50% des Ausgangswertes, bevorzugt maximal auf 80% des Ausgangswertes und ganz besonders bevorzugt maximal auf 90% des Ausgangswertes abgesunken ist, wobei die Fließgrenze τ_{c} gemessen wurde mittels Kegel-Platte-Geometrie mit einem Scherspalt von 105 µm bei einer Temperatur von 25 °C.

### Beispiele

### 1. Herstellung der modifizierten Kieselsäure:

### Beispiel 1:

Bei einer Temperatur von 25 °C unter Inertgas N₂ werden zu 100 g an hydrophiler Kieselsäure, mit einer Feuchte kleiner 1% und einem HCl Gehalt kleiner 100 ppm und mit einer spezifischen Oberfläche von 200 m²/g (gemessen nach der BET Methode nach DIN 66131 und 66132) (erhältlich unter dem Namen HDK^{®} N20 bei Wacker-Chemie AG, München, D), durch Verdüsen über eine Zweistoffdüse (Druck 5 bar), 4,0 g wäßrige NH₃-Lösung (25%ig) und anschließend 21 g Hexadecyltrimethoxysilan zugefügt. Die so beladene Kieselsäure wird bei einer Gesamtverweilzeit von 3 Stunden 1h bei 120 °C und anschließend 2 h bei 250 °C in einem 100 1 Trockenschrank unter N₂ zur Reaktion gebracht. Die Analysendaten sind in Tabelle 1 aufgeführt.

### Beispiel 2:

In einer kontinuierlichen Apparatur werden bei einer Temperatur von 30 °C unter Inertgas N₂ zu einem Massestrom von 1200 g/h an hydrophiler Kieselsäure, mit einer Feuchte kleiner 1% und einem HCl Gehalt kleiner 100 ppm und mit einer spezifischen Oberfläche von 200 m²/g (gemessen nach der BET Methode nach DIN 66131 und 66132) (erhältlich unter dem Namen HDK N20^{®} bei Wacker-Chemie AG, München, D), über Zweistoffdüsen (Druck 5 bar) 60 g/h wäßrige NH₃-Lösung (25%ig) und 120 g/h Octylmethyldimethoxysilan in flüssiger, feinstverteilter Form zugefügt. Die so beladene Kieselsäure wird bei einer Gesamtverweilzeit von 3 Stunden 1h in einem Reaktionsbehälter bei 140 °C und anschließend in einem weitern Reaktionsbehälter 2 h bei einer Temperatur von 280 °C zur Reaktion gebracht und dabei mittels Rühren fluidisiert, und anschließend in einem Trockner bei 150 °C und 1 Stunde Verweilzeit gereinigt. Die Analysedaten sind in Tabelle 1 aufgeführt.

### Beispiel 3 (nicht erfindungsgemäß):

Bei einer Temperatur von 25 °C unter Inertgas N₂ werden zu 100 g an hydrophiler Kieselsäure, mit einer Feuchte kleiner 1% und einem HCl Gehalt kleiner 100 ppm und mit einer spezifischen Oberfläche von 200 m²/g (gemessen nach der BET Methode nach DIN 66131 und 66132) (erhältlich unter dem Namen HDK^{®} N20 bei Wacker-Chemie GmbH, München, D), durch Verdüsen über eine Zweistoffdüse (Druck 5 bar), 4,0 g wäßrige NH₃-Lösung (25%ig) und anschließend 21 g Hexadecyltrimethoxysilan zugefügt. Die so beladene Kieselsäure wird bei einer Verweilzeit 2 h bei 150 °C in einem 100 1 Trockenschrank unter N₂ zur Reaktion gebracht. Die Analysendaten sind in Tabelle 1 aufgeführt.

**Tabelle 1**

| Beispiel | %C | n(Rest-SiOH) mol / 100 m² | n(extr. Silan) mol / 100 m² | f | Sₐ |
|---|---|---|---|---|---|
| 1 | 9,2 | 6,89 · 10⁻⁵ | 1,88 · 10⁻⁵ | 1,11 | 1,33 |
| 2 | 3,9 | 1,33 · 10⁻⁴ | 2,38 · 10⁻⁵ | 0,97 | 0,65 |
| 3 | 8,9 | 1,43 · 10⁻⁴ | 1,65 · 10⁻⁴ | 0,61 | 0,52 |

### Beschreibung der Analysenmethoden

1. Kohlenstoffgehalt (%C)
   - Elementaranalyse auf Kohlenstoff; Verbrennen der Probe bei über 1000°C im O₂-Strom, Detektion und Quantifizierung des entstehenden CO₂ mit IR; Gerät LECO 244
2. Restgehalt an nicht modifizierten Kieselsäure -Silanolgruppen
   - Methode: Säure-Base-Titration der in Wasser/Methanol = 50:50 suspendierten Kieselsäure; Titration im Bereich oberhalb des pH-Bereichs des isoelektrischen Punktes und unterhalb des pH-Bereichs der Auflösung der Kieselsäure
   - unbehandelte Kieselsäure mit 100% SiOH (Kieselsäure - Oberflächensilanolgruppen): SiOH-phil = 2 SiOH / nm²
   - silylierte Kieselsäure: SiOH-silyl
   - Kiesel-Rest-Silanolgehalt: %SiOH = SiOH-silyl/SiOHphil*100% (analog G.W. Sears Anal. Chem, 28 (12), (1950), 1981)
3. Extrahierbares Silylierungsmittel
   25 g Kieselsäure werden mit einem Spatel in 100 g THF eingearbeitet und anschließend unter Eiskühlung mit dem Dissolver Dispermat CA-40-C (Fa. Getzmann) mit Zahnscheibe 40 mm zu flüssiger Konsistenz verrührt, anschließend 60 s bei 8400 UpM geschert, dann 60 min mit Ultraschall equilibriert und nach 2 Tagen wird über eine Druckfiltration klares Filtrat abgetrennt. Das Filtrat wird mittels Atomabsorptionsspektroskopie (AAS) auf Siliciumgehalt untersucht. Nachweisgrenze < 100 ppm Organosiliciumverbindungen bezogen auf Kieselsäure.

### 2. Partikelhaltige Dispersionen

### Beispiel 4:

15 g einer Kieselsäure aus Beispiel 1 werden innerhalb von 15 min in 285 g eine typischen Epoxidharzhärter bestehend aus 41 Gew.% eines Polyamids mit einer Aminzahl von ca. 375(z.B. EPI-CURE Curing Agent 3140 der Fa. Resolution), 22 Gew.% eines Polyetherpolyamins (Jeffamin D400 der Fa. Huntsman), 4 Gew.% TETA (Triethylentetraamin) und 10 Gew.% IPD (Isophorondiamin) mittels eines Dissolvers Dispermat CA-40-C (Fa. Getzmann) mit 5 cm Zahnscheibe bei 600 upm eingerührt und anschließend für 10 min bei einer Umlaufgeschwindigkeit von 10 m/s unter einem Vakuum von 80 Torr und Kühlung mit Kühlwasser auf eine Kornfeinheit (Grindometerwert) von 90 µm herunterdispergiert. Lagerdaten der Dispersion sind in Tabelle 2 zusammengefaßt.

### Beispiel 5:

15 g einer Kieselsäure aus Beispiel 2 werden innerhalb von 15 min in 285 g eine typischen Epoxidharzhärter bestehend aus 41 Gew.% eines Polyamids mit einer Aminzahl von ca. 375(z.B. EPI-CURE Curing Agent 3140 der Fa. Resolution), 22 Gew.% eines Polyetherpolyamins (Jeffamin D400 der Fa. Huntsman), 4 Gew.% TETA (Triethylentetraamin) und 10 Gew.% IPD (Isophorondiamin) mittels eines Dissolvers Dispermat CA-40-C (Fa. Getzmann) mit 5 cm Zahnscheibe bei 600 upm eingerührt und anschließend für 10 min bei einer Umlaufgeschwindigkeit von 10 m/s unter einem Vakuum von 80 Torr und Kühlung mit Kühlwasser auf eine Kornfeinheit (Grindometerwert) von 90 µm herunterdispergiert. Lagerdaten der Dispersion sind in Tabelle 2 zusammengefaßt.

### Beispiel 6 (Vergleichsbeispiel):

15 g einer PDMS-modifizierten Kieselsäure mit einem Kohlenstoffwert von ca. 4,5 Gew% und einer spezifischen BET-Oberfläche der Ausgangskieselsäure von 200 m²/g (z.B. HDK^{®} H18 der Fa. Wacker-Chemie AG, München) werden innerhalb von 15 min in 285 g eine typischen Epoxidharzhärter bestehend aus 41 Gew.% eines Polyamids mit einer Aminzahl von ca. 375(z.B. EPI-CURE Curing Agent 3140 der Fa. Resolution), 22 Gew.% eines Polyetherpolyamins (Jeffamin D400 der Fa. Huntsman), 4 Gew.% TETA (Triethylentetraamin) und 10 Gew.% IPD (Isophorondiamin) mittels eines Dissolvers Dispermat CA-40-C (Fa. Getzmann) mit 5 cm Zahnscheibe bei 600 upm eingerührt und anschließend für 10 min bei einer Umlaufgeschwindigkeit von 10 m/s unter einem Vakuum von 80 Torr und Kühlung mit Kühlwasser auf eine Kornfeinheit (Grindometerwert) von 90 µm herunterdispergiert. Lagerdaten der Dispersion sind in Tabelle 2 zusammengefaßt.

### Beispiel 7 (Vergleichsbeispiel):

15 g einer Kieselsäure gemäß Beispiel 3 werden innerhalb von 15 min in 285 g eine typischen Epoxidharzhärter bestehend aus 41 Gew.% eines Polyamids mit einer Aminzahl von ca. 375(z.B. EPI-CURE Curing Agent 3140 der Fa. Resolution), 22 Gew.% eines Polyetherpolyamins (Jeffamin D400 der Fa. Huntsman), 4 Gew.% TETA (Triethylentetraamin) und 10 Gew.% IPD (Isophorondiamin) mittels eines Dissolvers Dispermat CA-40-C (Fa. Getzmann) mit 5 cm Zahnscheibe bei 600 upm eingerührt und anschließend für 10 min bei einer Umlaufgeschwindigkeit von 10 m/s unter einem Vakuum von 80 Torr und Kühlung mit Kühlwasser auf eine Kornfeinheit (Grindometerwert) von 90 µm herunterdispergiert. Lagerdaten der Dispersion sind in Tabelle 2 zusammengefaßt.

**Tabelle 2**

| | η₀₅ (7 d)/η₀₅(1 d) | TI (4 W)/TI(1d) |
|---|---|---|
| Beispiel 4 | 0, 94 | 0, 9 |
| Beispiel 5 | 0,91 | 0,925 |
| Beispiel 6 | 0,08 | 0,06 |
| Beispiel 7 | 0,3 | 0,1 |

### Beschreibung der Analysemethoden

Quotient der Scherviskositäten η₀₅(7 d)/η₀₅(1 d) und Thixotropieindex TI(4 W)/TI(1d): Die Scherviskosität wird mittels luftgelagertem Rheometer mit Kegel-Platte-Geometrie bei einem Scherspalt von 105 µm bei 25 °C gemessen. Zur Ermittlung der Viskosität wird dabei ein Meßprofil bestehend aus dem Abschnitt 1, 120 s Scherung bei 0,5 s⁻¹, Abschnitt 2, 10 s Scherung bei 500 s⁻¹, und Abschnitt 3, 180 s Scherung bei 0,5 s^{- 1}, eingesetzt. Der Thixotropieindex TI ergibt sich dann aus dem Mittelwert der letzten 10 Datenpunkte aus Abschnitt 3 dividiert durch den letzten Datenpunkt aus Abschnitt 2, wobei in Abschnitt 1 und 3 alle 2 s ein Datenpunkt ermittelt wurde und in Abschnitt 2 jede Sekunde ein Datenpunkt ermittelt wurde. Die Scherviskosität bei 0,5 s⁻¹ (η₀₅) wird aus den gemittelten 10 letzten Datenpunkten von Abschnitt 1 berechnet.

## Patentansprüche

1. Verfahren zur Herstellung- von pyrogenen Kieselsäuren, die mit Gruppen der allgemeinen Formel (I)
RₐSiR¹_{b}O_{c}- (I)
modifiziert sind, wobei
a 1, 2, 3,
b 0, 1, 2,
c 1, 2, 3, sein kann, wobei
a + b + c = 4 ist, wobei
R ein einwertiger, gegebenenfalls einfach oder mehrfach ungesättigter, gegebenenfalls verzweigter Kohlenwasserstoffrest mit 1 bis 24 C-Atomen,
R¹ ein ebenfalls einwertiger, gegebenenfalls einfach oder mehrfach ungesättigter, gegebenenfalls verzweigter Kohlenwasserstoffrest mit 1 bis 20 C-Atomen sein kann,
wobei zumindest einer der Reste R oder R¹ größer C3 pro Molekül vorhanden sein muß, **dadurch gekennzeichnet, daß** die Belegung der Kieselsäure mit einem Alkylsilan bei Temperaturen von -30 bis 250 °C erfolgt, bei einem Temperaturgradient im Bereich von 20 °C bis 350 °C, d.h., daß die Reaktionstemperatur im Laufe der Reaktionszeit ansteigt, zur Reaktion gebracht wird, wobei dies bedeutet, daß die Produkttemperatur zu Beginn der Reaktion in einem Bereich von 20 bis 40 °C und weiterhin, daß die Produkttemperatur gegen Ende der Reaktion in einem Bereich von 120 bis 350 °C liegt, wobei der Temperaturgradient abhängig vom Ort (kontinuierlich) oder abhängig von der Zeit (diskontinuierlich) ist und die Abreinigung bei einer Reinigungstemperatur von 20 bis 200 °C erfolgt.

2. Verfahren zur Herstellung der Kieselsäure nach Anspruch 1, **dadurch gekennzeichnet, daß** es sich bei dem Alkylsilan um Silane der allgemeinen Formel II,
RₐSiR¹_{b}X_{c} (II)
wobei R, R¹, a, b, c die oben genannte Bedeutung haben und X = Halogen, Stickstoffrest, OR¹, OCOR¹, O(CH₂)ₓOR¹ und x = 1, 2, 3 bedeutet, handelt.

3. Kieselsäuren hergestellt nach Anspruch 1 oder 2, **dadurch gekennzeichnet, daß** die Kieselsäuren ein chemisches Modifizierungsverhältnis von f gleich 0,8 bis 1,5 aufweisen, wobei das chemische Modifizierungsverhältnis f definiert ist als f = (n(Alkylsilan) - n(extrahierbares Silan) / n(Silanolgehalt) - n(Rest-Silanolgehalt), wobei n(Alkylsilan) die über den Kohlenstoffgehalt der Kieselsäure zugängliche Silanmenge pro 100 m²/g spezifische Ausgangskieselsäureoberfläche ist, n(extrahierbares Silan) die mittels Extraktion und anschließender Si-AAS-Messung quantitativ bestimmte extrahierbare Silanmenge pro 100 m²/g spezifische Ausgangskieselsäureoberfläche ist, n(Silanolgehalt) der mittels Säure-Basen-Titration bestimmte Silanolgehalt einer hydrophilen pyrogenen Kieselsäure pro 100 m²/g spezifische Ausgangskieselsäureoberfläche ist, der erfahrungsgemäß ca. 0,0003 mol pro 100 m²/g spezifische Kieselsäureoberfläche ist und n(Rest-Silanolgehalt) der mittels Säure-Basen-Titration bestimmte Rest-Silanolgehalt pro 100 m²/g spezifische Ausgangskieselsäureoberfläche ist und die Restsilanolgruppendichte der Kieselsäure kleiner 1,0 SiOH-Gruppen / nm² ist.

4. Verfahren zur stabilen Einstellung der Fließeigenschaften von basischen Substanzen und Substanzgemischen, **dadurch gekennzeichnet, dass** Kieselsäuren hergestellt nach Anspruch 1 und 2 oder Kieselsäuren nach Anspruch 3 zugegeben werden.

5. Verfahren zur stabilen Einstellung der Fließeigenschaften von basischen Substanzen und Substanzgemischen nach Anspruch 4, **dadurch gekennzeichnet, dass** es sich bei den Substanzen oder deren beliebigen Mischungen um Flüssigkeiten, als Reinstoff oder Mischung, die stark basische Gruppen bzw. Verbindungen enthalten wie Hydroxidionen, Ammoniak, niedermolekulare Amine wie Trialkylamin wie Trimethylamin, Triethylamin, Pyridine und andere basische N-Heterocyclen, aliphatische Polyamine wie Ethylendiamin oder deren höhere Derivate wie Diethylentriamin oder Triethylentetramin oder Hexyldiamin, cycloaliphatische Polyamine wie Isophorondiamin oder Cyclohexyldiamin, Mannichbasen, aromatische Polyamine wie Aniline wie Methylendianilin, 4,4-Diaminodiphenylsulfon, m-Xylendiamin, amingruppenhaltige Oligomere oder Polymere wie Diaminopolyethylenoxide oder Diaminopolyproplyenoxide wie Jeffamine, Polyamidoamine wie Umsetzungsprodukte aus Fettsäuren und Polyaminen, Imidazoline, Polyaminoamid-Addukte wie Umsetzungen von überschüssigen Polyaminen oder Polyamiden mit Epoxyharzen, Dicyanamid handelt.

6. Verfahren zur stabilen Einstellung der Fließeigenschaften von basischen Substanzen und substanzgemischen nach Anspruch 4 oder 5, **dadurch gekennzeichnet, dass** die Scherviskosität η nach einer Lagerzeit von 4 Woche bei 40 °C maximal auf 50 % des Ausgangswertes der Viskosität abgesunken ist, wobei die Viskosität mittels Kegel-Platte-Geometrie mit einem Scherspalt von 105 µm und einer Scherrate von 0,5 s⁻¹ bei 25 °C gemessen wurde.

## Claims

1. Process for preparing pyrogenic silicas modified with groups of the general formula (I)
RₐSiR¹_{b}O_{c}- (I)
where
a can be 1, 2 or 3,
b can be 0, 1 or 2, and
c can be 1, 2 or 3, and
a + b + c = 4, and
R is a monovalent, optionally mono- or polyunsaturated, optionally branched hydrocarbon radical having 1 to 24 carbon atoms,
R¹ can be a likewise monovalent, optionally mono- or polyunsaturated, optionally branched hydrocarbon radical having 1 to 20 carbon atoms,
it being necessary for at least one of the radicals, R or R¹, to be present greater than C3 per molecule, **characterized in that** the covering of the silica with an alkylsilane takes place at temperatures from -30 to 250°C, reaction takes place with a temperature gradient in the range from 20°C to 350°C, i.e., the reaction temperature rises in the course of the reaction time, this meaning that the product temperature at the beginning of the reaction is in a range from 20 to 40°C and, furthermore, that toward the end of the reaction the product temperature is in a range from 120 to 350°C, with the temperature gradient being dependent on the location (continuous) or dependent on the time (discontinuous) and the purification taking place at a purification temperature of 20 to 200°C.

2. Process for preparing the silica according to Claim 1, **characterized in that** the alkylsilane comprises silanes of the general formula II
RₐSiR¹_{b}X_{c} (II)
where R, R¹, a, b, and c are as defined above and X = halogen, nitrogen radical, OR¹, OCOR¹ or O(CH₂)ₓOR¹ and x = 1, 2 or 3.

3. Silicas prepared according to Claim 1 or 2, **characterized in that** the silicas have a chemical modification ratio f of 0.8 to 1.5, the chemical modification ratio f being defined as f = (n(alkylsilane) - n(extractable silane) / n(silanol content) - n(residual silanol content), where n(alkylsilane) is the amount of silane per 100 m²/g specific starting silica surface, obtainable via the carbon content of the silica, n(extractable silane) is the amount of extractable silane per 100 m²/g specific starting silica surface area, determined quantitatively by means of extraction and subsequent Si-AAS measurement, n(silanol content) is the silanol content of a hydrophilic pyrogenic silica per 100 m²/g specific starting silica surface area, determined by means of acid-base titration, which from experience is approximately 0.0003 mol per 100 m²/g of specific silica surface area, and n(residual silanol content) is the residual silanol content per 100 m²/g specific starting silica surface area, determined by means of acid-base titration, and the residual silanol group density of the silica is less than 1.0 SiOH groups/nm².

4. Method of stably setting the flow properties of basic substances and substance mixtures, **characterized in that** silicas prepared according to Claim 1 or 2 or silicas according to Claim 3 are added.

5. Method of stably setting the flow properties of basic substances and substance mixtures according to Claim 4, **characterized in that** the substances or any desired mixtures thereof are liquids, in single-substance or mixture form, which contain strongly basic groups and/or compounds, such as hydroxide ions, ammonia, low molecular mass amines such as trialkylamine such as trimethylamine, triethylamine, pyridines and other basic N-heterocycles, aliphatic polyamines such as ethylenediamine or higher derivatives thereof such as diethylenetriamine or triethylenetetramine or hexyldiamine, cycloaliphatic polyamines such as isophoronediamine or cyclohexyldiamine, Mannich bases, aromatic polyamines such as anilines such as methylenedianiline, 4,4-diaminodiphenyl sulfone, m-xylenediamine, amino-containing oligomers or polymers such as diaminopolyethylene oxides or diaminopolypropylene oxides such as Jeffamines, polyamidoamines such as reaction products of fatty acids and polyamines, imidazolines, polyaminoamide adducts such as reactions of excess polyamines or polyamides with epoxy resins, dicyanamide.

6. Method of stably setting the flow properties of basic substances and substance mixtures according to Claim 4 or 5, **characterized in that** the shear viscosity η after a storage time of 4 weeks at 40°C has dropped at most to 50% of the initial viscosity value, the viscosity being measured by means of cone/plate geometry with a shearing gap of 105 µm and a shear rate of 0.5 s⁻¹ at 25°C.

## Revendications

1. Procédé pour la préparation de silices pyrogènes modifiées par des groupes de formule générale (I)
RₐSiR¹_{b}O_{c}- (I)
où
a peut valoir 1, 2, 3
b peut valoir 0, 1, 2
c peut valoir 1, 2, 3, où
a + b + c = 4,
R peut représenter un radical hydrocarboné monovalent, le cas échéant monoinsaturé ou polyinsaturé, le cas échéant ramifié, comprenant 1 à 24 atomes de carbone,
R¹ peut représenter un radical hydrocarboné également monovalent, le cas échéant monoinsaturé ou polyinsaturé, le cas échéant ramifié, comprenant 1 à 20 atomes de carbone,
au moins un des radicaux R ou R¹ plus grand que C3 devant être présent par molécule, **caractérisé en ce que** le revêtement de la silice par un alkylsilane a lieu à des températures de -30 à 250°C, elle est amenée à réagir à un gradient de température dans la plage de 20°C à 350°C, c'est-à-dire que la température de réaction augmente au cours du temps de réaction, ceci signifiant que la température du produit se situe, au début de la réaction, dans une plage de 20 à 40°C et en outre que la température du produit vers la fin de la réaction se situe dans une plage de 120 à 350°C, le gradient de température étant dépendant du lieu (continu) ou du temps (discontinu) et la purification étant réalisée à une température de purification de 20 à 200°C.

2. Procédé pour la production de la silice selon la revendication 1, **caractérisé en ce qu'**il s'agit, pour l'alkylsilane, de silanes de formule générale II,
RₐSiR¹_{b}X_{c} (II)
où R, R¹, a, b, c présentent la signification susmentionnée et X = halogène, radical azoté, OR¹, OCOR¹, O(CH₂)ₓOR¹ et x = 1, 2, 3.

3. Silices préparées selon la revendication 1 ou 2, **caractérisées en ce que** les silices présentent un rapport de modification chimique f valant 0,8 à 1,5, le rapport de modification chimique f étant défini par f = (n(alkylsilane) - n(silane extractible) / n(teneur en silanol) - n(teneur résiduelle en silanol), n(alkylsilane) étant la quantité de silane accessible via la teneur en carbone de la silice par 100 m²/g de surface spécifique de la silice de départ, n(silane extractible) étant la quantité de silane extractible déterminée quantitativement par extraction et mesure consécutive de Si par spectrométrie par absorption atomique par 100 m²/g de surface spécifique de la silice de départ, n(teneur en silanol) étant la teneur en silanol déterminée par titrage acide-base d'une silice pyrogène hydrophile par 100 m²/g de surface spécifique de la silice de départ, qui vaut selon l'invention environ 0,0003 mole par 100 m²/g de surface spécifique de la silice de départ, et n(teneur résiduelle en silanol) étant la teneur résiduelle en silanol déterminée par titrage acide-base par 100 m²/g de surface spécifique de la silice de départ et la densité des groupes silanol résiduels de la silice étant inférieure à 1,0 groupe de SiOH / nm².

4. Procédé pour le réglage stable des propriétés d'écoulement de substances basiques et de mélanges de substances basiques, **caractérisé en ce que** des silices préparées selon la revendication 1 et 2 ou des silices selon la revendication 3 sont ajoutées.

5. Procédé pour le réglage stable des propriétés d'écoulement de substances basiques et de mélanges de substances basiques selon la revendication 4, **caractérisé en ce qu'**il s'agit, pour les substances ou leurs mélanges quelconques, de liquides, sous forme de substance pure ou de mélange, qui contiennent des groupes ou des composés fortement basiques, tels que les ions hydroxyde, l'ammoniac, les amines de bas poids moléculaire telles que la trialkylamine telle que la triméthylamine, la triéthylamine, les pyridines et d'autres N-hétérocycles basiques, les polyamines aliphatiques telles que l'éthylènediamine ou ses dérivés supérieurs tels que la diéthylènetriamine ou la triéthylènetétraamine ou l'hexyldiamine, les polyamines cycloaliphatiques telles que l'isophoronediamine ou la cyclohexyldiamine, les bases de Mannich, les polyamines aromatiques telles que l'aniline telle que la méthylènedianiline, la 4,4-diaminodiphénylsulfone, la m-xylènediamine, les oligomères ou les polymères contenant des groupes amine tels que les diaminopoly(oxydes d'éthylène) ou les diaminopoly(oxydes de propylène), tels que les Jeffamines, les polyamidoamines telles que les produits de transformation d'acides gras et de polyamines, les imidazolines, les produits d'addition de polyaminoamide tels que les transformations de polyamines en excès ou de polyamides en excès avec des résines époxy, le dicyanamide.

6. Procédé pour le réglage stable des propriétés d'écoulement de substances basiques et de mélanges de substances basiques selon la revendication 4 ou 5, **caractérisé en ce que** la viscosité de cisaillement η après un temps d'entreposage de 4 semaines à 40°C a diminué au maximum à 50% de la valeur de départ de la viscosité, la viscosité étant mesurée au moyen d'une géométrie cône-plaque avec une fente de cisaillement de 105 µm et une vitesse de cisaillement de 0,5 s⁻¹ à 25°C.
